# EUROPEAN PATENT SPECIFICATION

(11) **EP 3 124 807 B1**
(45) Date of publication and mention of the grant of the patent: **30.10.2019**
(21) Application number: 15179041.7
(22) Date of filing: 30.07.2015
(51) Int. Cl.: E05F 15/63, F16B 39/32

(54) **ACTUATION DEVICE FOR OPENING AND/OR CLOSING A VEHICLE DOOR**
BETÄTIGUNGSVORRICHTUNG ZUM ÖFFNEN UND/ODER SCHLIESSEN EINER FAHRZEUGTÜR
DISPOSITIF D'ACTIONNEMENT POUR OUVRIR ET/OU FERMER UNE PORTE DE VÉHICULE

(43) Date of publication of application: 01.02.2017
(73) Proprietor: U-Shin Deutschland Zugangssysteme GmbH, 85253 Erdweg (DE)
(72) Inventor: LINDER, Anton, 85253 Erdweg (DE); DEUTSCHMANN, Nicolai, Erdweg (DE)
(74) Representative: Verriest, Philippe

(56) References cited:
- DE-U1-202011 102 773
- US-A- 6 102 639
- US-A1- 2005 100 424
- US-A1- 2006 071 504

## Description

The invention relates to an actuation device for opening and/or closing a vehicle door as well as a vehicle comprising such actuation device.

Such an actuation device is known from US 2006/0071504 and is configured for example to open and/or close a vehicle door, such as a trunk.

The known actuation device comprises typically a first fixed arm connected to the body of the vehicle and a second arm, typically called "crank", moveable relatively to the first arm. The second arm is generally mounted on a planet carrier which allows a rotational movement. The end of the second arm is connected to a curve element which is connected to a door, such as a trunk, and make this latter rotate the trunk in an opening and/or closing position.

A nut is disposed at an end of the planet carrier.

The efficiency of the fixation may be reduced by the vibrations undergone by the vehicle which tends to unscrew the nut.

If the nut is not sufficiently fixed on the second arm of the planet carrier, a play appears which leads to unpleasant noise and to less efficiency.

Furthermore, in case of defects, it could be advantageous to disassemble the actuation device in order to check the parts of the actuation device.

An object of the invention is to propose an actuation device in which the crank fixation is reversible and also secured against self-opening based on a reusable system.

To this end the invention relates to an actuation device for opening and/or closing a vehicle door, the device comprising:
- driving means extending along a longitudinal axis and comprising a first driving portion and a connecting external threaded portion,
- an arm projecting from the driving axis, the arm comprising a driven portion configured to cooperate with the driving portion so as to connect the arm to the driving means in order for the arm to be rotated by the driving means according to the longitudinal axis,
- fixing means comprising an internal threaded portion intended for cooperating with the connecting external threaded portion of the driving means, the said fixing means being configured to fix the arm to the driving means,
wherein the fixing means comprise at least one securing projection intended to cooperate with a securing recess of the driving means to prevent the rotation of the fixing in an unscrewing direction, and comprise at least one protuberance intended to be pressed against a connecting wall of the driving means, giving frictional forces for an effective retaining of the fixing means on the driving means.

Advantageously, the actuation device of the invention comprises a reversible and reusable system to secure the nut against self-opening based on fixing means with at least one a securing projection configured to cooperate with a corresponding recess of the driving means for securing the fixing means against self-opening.

Furthermore, the securing projection may be actuated such that the fixing means may be disassembled.

According to further embodiments which can be considered alone or in combination:
- the securing projection is made in a resilient material; and/or
- the securing recess comprises a stop wall sensibly perpendicular to the unscrewing movement of the securing projection, the said stop wall being intended to receive a wall of the securing projection sensibly perpendicular to the unscrewing movement when the said securing projection is received in the securing recess; and/or
- the securing projection comprises an inclined wall intended to slide on a sliding wall of the securing recess; and/or
- the sliding wall intended to receive the inclined wall of the securing projection is a ramp; and/or
- the ramp is opposite to the stop wall; and/or
- the protuberances are disposed regularly around the internal threaded portion; and/or
- the fixing means comprise eight protuberances, preferably disposed at an angle of about 45°; and/or
- the protuberances are made in a resilient material; and/or
- the at least one protuberance is a clip; and/or
- the at least one securing projection is a clip; and/or
- the securing projection and the at least one protuberance are sensibly identical; and/or
- the securing projection and/or the at least one protuberance are disposed each in a cavity made in the fixing means; and/or
- the fixing means are a nut and the driving means are a planet carrier.

The invention further relates to a vehicle comprising a door able to be moveable in an open or closed position by an actuation device of invention.

Other features and advantages of the present invention will become apparent from the following description of non-limitative embodiments, with reference to the attached drawings in which:
- figure 1 is a space view of the actuation device of the invention in a disassembled state;
- figure 2 is a cross sectional view of a driving means of the actuation device of figure 1;

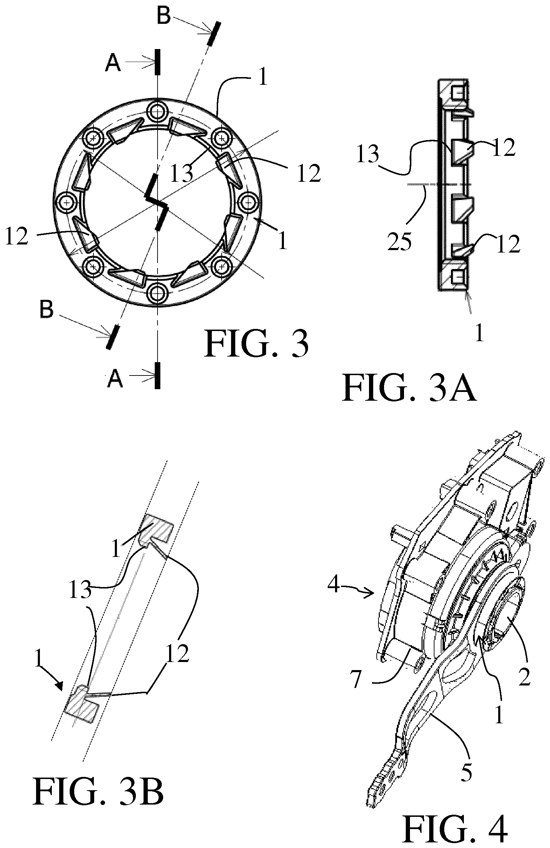

- figure 3 is a plane view of fixing means of the actuation device of figure 1;
- figure 3A is a cross sectional view according to AA of figure 3;
- figure 3B is a cross sectional view according to BB of figure 3;
- figure 4 is a space view of the actuation device of figure 1 in an assembled state;

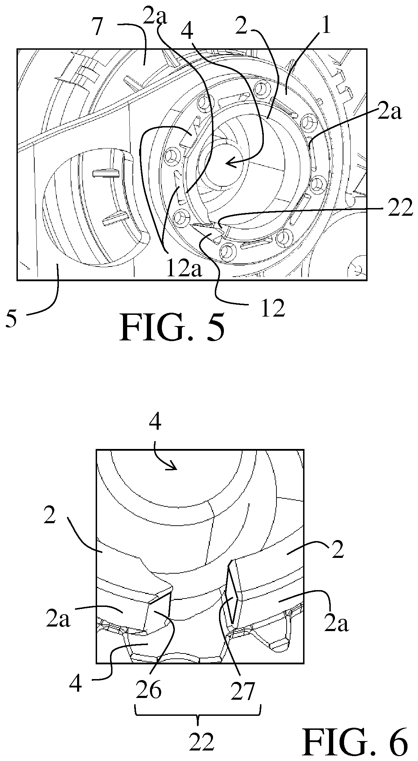

- figure 5 is a close view of the fixing means mounted on the driving means of the actuation device of figure 4;
- figure 6 is a close view of a securing recess of the driving means of the actuation device of the invention;

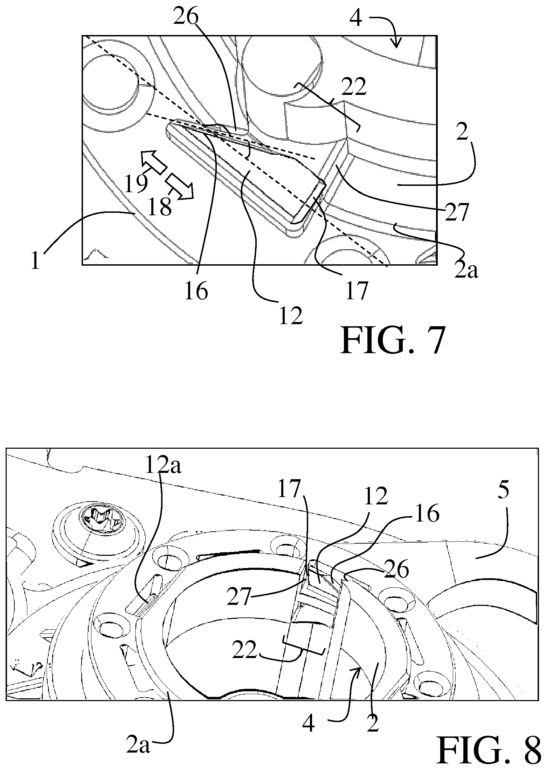

- figure 7 is a close view of a securing projection cooperating with the securing projection of figure 6;
- figure 8 is a close view of operating securing projection and protuberance in the actuation device of the invention.

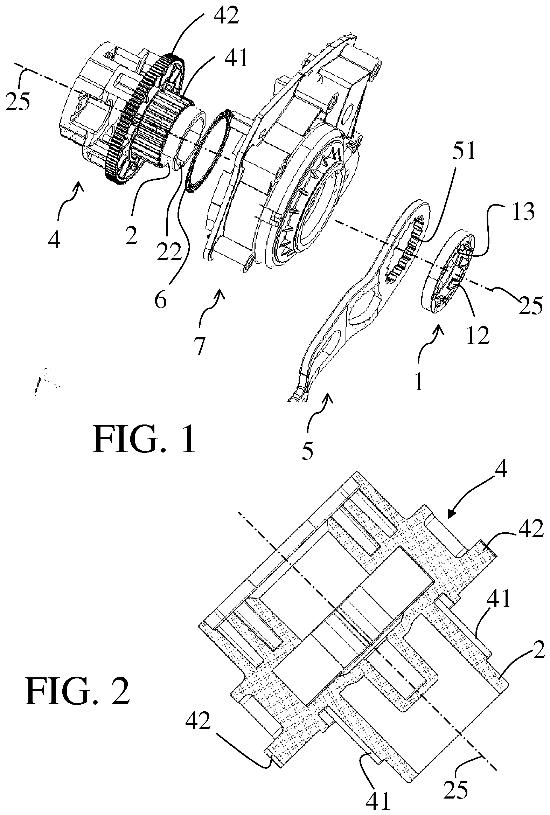

Referring to figure 1, the invention concerns an actuation device for opening and/or closing a vehicle door, such as a trunk.

The actuation device comprises driving means 4 configured to drive the vehicle door so as to open and/or close the door. The driving means 4 extend along a longitudinal axis 25. The driving means 4 comprise a first driving portion 41 and a connecting external threaded portion 2.

The actuation device further comprises an arm 5 projecting from the driving axis 25. The arm 5 comprises a driven portion 51 configured to cooperate with the driving portion 41 so as to connect the arm 5 to the driving means 4 in order for the arm 5 to be rotated by the driving means 4 according to the longitudinal axis 25.

The driven portion 51 and the driving portion 41 preferably comprise corresponding interlocking structures configured to cooperate together when the arm 5 is connected to the driving means 4. For example, driven portion 51 is configured to receive the driving portion 41 in this regard as shown in figure 1.

The actuation device further comprises fixing means 1 comprising an internal threaded portion 13. The internal threaded portion is configured to cooperate with the connecting external threaded portion 2 of the driving means 4. The fixing means 1 are configured to fix the arm 5 to the driving means 4. In particular, the arm is placed on the driving portion 41 and the fixing means 1 are then placed on the connecting external threaded portion 2, such that the arm 5 cannot be moved towards the external threaded portion 2.

The internal threaded portion 13 is configured to extend around the axis 25 when the fixing means 1 are mounted on the driving means 4.

According to one aspect of the invention, the fixing means 1 comprise at least one securing projection 12 intended to cooperate with a securing recess 22 of the driving means 4 to prevent the rotation of the fixing in an unscrewing direction 18. In particular, the securing recess 22 is on the external threaded portion 2.

Advantageously, the securing projection 12 cooperating with the securing recess 22 blocks the fixing means 1 such that the arm 5 is maintained fixed on the driving means 4. In addition, the securing projection 12 may be pushed out of the securing recess 22, in particular by means of a tool, such as a screwdriver, so as to unscrew the fixing means 1. Thus, the activation device of the invention may be easily disassembled to check or change parts if needed.

According to an embodiment, the securing projection 12 is made in a resilient material. In particular, a resilient securing projection 12 can enter the securing recess 22 during the screwing of the fixing means 1 when the securing projection 12 faces the securing recess 22.

The securing recess 22 preferably comprises a stop wall 27 sensibly perpendicular to the unscrewing movement of the securing projection 12. The stop wall 27 is intended to receive a wall 17 of the securing projection 12 sensibly perpendicular to the unscrewing movement when the said securing projection 12 is received in the securing recess 22. The cooperation between the stop wall and the wall 17 blocks the unscrewing of the fixing means 1.

The securing projection 12 preferably comprises an inclined wall 16 intended to slide on a sliding wall 26 of the securing recess 22. The inclines wall 16 and the sliding wall 26 are oblique with respect to the screwing direction 19. Advantageously, the inclined wall 16 sliding on the sliding wall 26 enable to continue the screwing movements even if the securing projection 12 is in the securing recess 22.

The sliding wall 26 intended to receive the inclined wall 16 of the securing projection 12 is preferably a ramp. The ramp is preferably opposite to the stop wall 27.

According to another aspect of the invention, the fixing means 1 comprise at least one protuberance 12a intended to be pressed against a connecting wall 2a of the driving means 4. In particular, the connecting wall 2a is part of the external threaded portion 2.

The protuberances 12a are preferably disposed regularly around the internal threaded portion 13. Advantageously, the frictional forces are thus regularly spread on the external treaded portion 2 of the driving means 4, for an effective retaining of the fixing means 1 on the driving means 4.

The fixing means 1 preferably comprise eight protuberances 12a. The eight protuberances are preferably disposed at an angle of about 45° around the internal threaded portion. Eight protuberances 12a enable a good maintenance of the fixing means 1 and leave enough space to have an effective internal threaded portion 13, where the internal threaded portion 13 is interrupted by the protuberances 12a.

More generally, the fixing means could have a given number of protuberances disposed at an angle corresponding to 360° divided by said given number.

The protuberances 12a are preferably made in a resilient material. A resilient material enables satisfactory friction forces. One or more pads may be used as protuberance(s) 12a.

The at least one protuberance 12a is preferably a clip. According to an embodiment, all the protuberances 12a are clips. Advantageously, a clip is easy to manufacture in a resilient material and then insert in a corresponding cavity of the fixing means 1.

Similarly, the at least one securing projection 12 is preferably a clip. According to an embodiment, all the securing projections 12 are clips.

In a preferred embodiment, the at least one securing projection 12 and the at least one protuberance 12a are sensibly identical.

Advantageously, identical securing projection 12 and protuberances 12a are manufactured and placed on the fixing means 1 at the same time. This aspect quickens the manufacturing process. In addition, in this embodiment, when screwing the fixing means 1, the clip facing the securing recess 22 functions as a securing projection 12, and the clip facing the connecting wall 22 functions as a protuberance 12a. This aspect involves both a satisfactory blocking of the fixing means 1 and frictional forces.

According to an embodiment, the fixing means 1 comprises eight identical clips 12, 12a and the driving means 4 comprise one securing recess 22.

In an alternative embodiment, the fixing means comprises seven protuberances 12a, and one securing projection 12 and the driving means 4 comprise one securing recess 22.

According to a preferred embodiment, the securing projection 12 and/or the at least one protuberance 12a are disposed each in a cavity made in the fixing means 1. A cavity enables to make the fixing means 1 in a different material than a resilient projection 12 and/or protuberance 12a and then insert the latter in the cavity.

According to an embodiment, the fixing means 1 are a nut and the driving means 4 are a planet carrier. The invention enables to avoid self-opening of the nut out of the planet carrier and also the resulting noises due to collisions of parts of the planet carrier and/or the arm 5 and nut.

The planet carrier may comprise engagement teeth 42 configured to drive a sensor gear when the planet carrier is connected to a planet gear system.

In the mounting of the actuation device, a spacer disc 6 may be mounted on the planet carrier and the assembly may be inserted in a through-hole of a cover 7 with friction bearings from a first side of the cover such that a part of the driving portion 41 and the external threaded portion 2 comes out of a second side of the cover 7. The arm 5 may then be placed on the driving portion 41 at said second side and fixed with the nut placed on the external threaded portion 2.

The invention has been described above with the aid of embodiments without limitation of the general inventive concept as defined in the claims.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Actuation device for opening and/or closing a vehicle door, the device comprising:
- driving means (4) extending along a longitudinal axis (25) and comprising a first driving portion (41) and a connecting external threaded portion (2),
- an arm (5) projecting from the driving axis (25), the arm (5) comprising a driven portion (51) configured to cooperate with the driving portion (41) so as to connect the arm (5) to the driving means (4) in order for the arm (5) to be rotated by the driving means according to the longitudinal axis (25),
- fixing means (1) comprising an internal threaded portion (13) intended for cooperating with the connecting external threaded portion (2) of the driving means (4), the said fixing means (1) being configured to fix the arm (5) to the driving means (4),
wherein the fixing means (1) comprise at least one securing projection (12) intended to cooperate with a securing recess (22) of the driving means (4) to prevent the rotation of the fixing in an unscrewing direction,
and comprise at least one protuberance (12a) intended to be pressed against a connecting wall (2a) of the driving means (4), giving frictional forces for an effective retaining of the fixing means (1) on the driving means (4).

2. Actuation device according to the preceding claim, wherein the securing projection (12) is made in a resilient material.

3. Actuation device according to any one of claim 1 or 2, wherein the securing recess (22) comprises a stop wall (27) sensibly perpendicular to the unscrewing movement of the securing projection (12), the said stop wall (27) being intended to receive a wall (17) of the securing projection (12) sensibly perpendicular to the unscrewing movement when the said securing projection (12) is received in the securing recess (22).

4. Actuation device according to any one of the preceding claims, wherein the securing projection (12) comprises an inclined wall (16) intended to slide on a sliding wall (26) of the securing recess (22).

5. Actuation device according to the preceding claim, wherein the sliding wall (26) intended to receive the inclined wall (16) of the securing projection (12) is a ramp.

6. Actuation device according to the previous claim in association with claim 3, wherein the ramp is opposite to the stop wall (27).

7. Actuation device according to any of the preceding claims, wherein the protuberances (12a) are disposed regularly around the internal threaded portion (13).

8. Actuation device according to the previous claim, wherein the fixing means (1) comprise eight protuberances (12a), preferably disposed at an angle of about 45°.

9. Actuation device according to any one of claims 7 or 8, wherein the protuberances (12a) are made in a resilient material.

10. Actuation device according to anyone of the preceding claims, wherein the at least one protuberance (12a) is a clip.

11. Actuation device according to any one of the preceding claims, wherein the at least one securing projection (12) is a clip.

12. Actuation device according to any one of the preceding claims, wherein the securing projection (12) and the at least one protuberance (12a) are sensibly identical.

13. Actuation device according to any one of the preceding claims, wherein the securing projection (12) and/or the at least one protuberance (12a) are disposed each in a cavity made in the fixing means (1).

14. Actuation device according to any one of the preceding claims, wherein the fixing means (1) are a nut and the driving means (4) are a planet carrier.

15. Vehicle comprising a door able to be moveable in an open or closed position by an actuation device according to any one of the previous claims.

## Patentansprüche

1. Betätigungsvorrichtung zum Öffnen und/oder Schließen einer Fahrzeugtür, wobei die Vorrichtung Folgendes umfasst:
- Antriebsmittel (4), die sich entlang einer Längsachse (25) erstrecken und einen ersten Antriebsabschnitt (41) und einen Außengewinde Verbindungsabschnitt (2) umfassen,
- einen Arm (5), der von der Antriebsachse (25) vorragt, wobei der Arm (5) einen Abtriebsabschnitt (51) umfasst, der konfiguriert ist, um mit dem Antriebsabschnitt (41) derart zusammenzuwirken, dass der Arm (5) mit den Antriebsmitteln (4) verbunden ist, damit der Arm (5) von den Antriebsmitteln entlang der Längsachse (25) gedreht wird,
- Befestigungsmittel (1), die einen Innengewinde Abschnitt (13) umfassen, der dazu bestimmt ist, mit dem Außengewinde Verbindungsabschnitt (2) der Antriebsmittel (4) zusammenzuwirken, wobei die Befestigungsmittel (1) konfiguriert sind, um den Arm (5) an den Antriebsmitteln (4) zu befestigen,
wobei die Befestigungsmittel (1) mindestens einen Befestigungsvorsprung (12) umfassen, der dazu bestimmt ist, mit einer Befestigungsvertiefung (22) der Antriebsmittel (4) zusammenzuwirken, um das Drehen der Befestigung in eine Aufschraubrichtung zu verhindern,
und mindestens eine Ausstülpung (12a) umfassen, die dazu bestimmt ist, gegen eine Verbindungswand (2a) der Antriebsmittel (4) gepresst zu werden, was Reibungskräfte für ein effektives Zurückhalten der Befestigungsmittel (1) auf den Antriebsmitteln (4) ergibt.

2. Betätigungsvorrichtung nach dem vorstehenden Anspruch, wobei der Befestigungsvorsprung (12) aus einem federnden Metall hergestellt ist.

3. Betätigungsvorrichtung nach einem der Ansprüche 1 oder 2, wobei die Befestigungsvertiefung (22) eine Stoppwand (27) umfasst, die im Wesentlichen zu der Aufschraubbewegung des Befestigungsvorsprungs (12) senkrecht ist, wobei die Stoppwand (27) dazu bestimmt ist, eine Wand (17) des Befestigungsvorsprungs (12) im Wesentlichen senkrecht zu der Aufschraubbewegung aufzunehmen, wenn der Befestigungsvorsprung (12) in der Befestigungsvertiefung (22) aufgenommen ist.

4. Betätigungsvorrichtung nach einem der vorstehenden Ansprüche, wobei der Befestigungsvorsprung (12) eine schräge Wand (16) umfasst, die dazu bestimmt ist, entlang einer Gleitwand (26) der Befestigungsvertiefung (22) zu gleiten.

5. Betätigungsvorrichtung nach dem vorstehenden Anspruch, wobei die Gleitwand (26), die dazu bestimmt ist, die schräge Wand (16) des Befestigungsvorsprungs (12) aufzunehmen, eine Rampe ist.

6. Betätigungsvorrichtung nach dem vorstehenden Anspruch in Assoziation mit Anspruch 3, wobei die Rampe der Stoppwand (27) gegenüberliegt.

7. Betätigungsvorrichtung nach einem der vorstehenden Ansprüche, wobei die Ausstülpungen (12a) regelmäßig um den Innengewinde Abschnitt (13) angeordnet sind.

8. Betätigungsvorrichtung nach dem vorstehenden Anspruch, wobei die Befestigungsmittel (1) acht Ausstülpungen (12a) umfassen, die bevorzugt mit einem Winkel von etwa 45° angeordnet sind.

9. Betätigungsvorrichtung nach einem der Ansprüche 7 oder 8, wobei die Ausstülpungen (12a) aus einem federnden Material hergestellt sind.

10. Betätigungsvorrichtung nach einem der vorstehenden Ansprüche, wobei die mindestens eine Ausstülpung (12a) ein Clip ist.

11. Betätigungsvorrichtung nach einem der vorstehenden Ansprüche, wobei der mindestens eine Befestigungsvorsprung (12) ein Clip ist.

12. Betätigungsvorrichtung nach einem der vorstehenden Ansprüche, wobei der Befestigungsvorsprung (12) und die mindestens eine Ausstülpung (12a) im Wesentlichen identisch sind.

13. Betätigungsvorrichtung nach einem der vorstehenden Ansprüche, wobei der Befestigungsvorsprung (12) und/oder die mindestens eine Ausstülpung (12a) jeweils in einem Hohlraum, der in den Befestigungsmitteln (1) hergestellt ist, angeordnet sind.

14. Betätigungsvorrichtung nach einem der vorstehenden Ansprüche, wobei die Befestigungsmittel (1) eine Mutter sind, und die Antriebsmittel (4) ein Planetenradträger sind.

15. Fahrzeug, das eine Tür umfasst, die fähig ist, um in eine offene oder geschlossene Position von einer Betätigungsvorrichtung nach einem der vorstehenden Ansprüche bewegbar zu sein.

## Revendications

1. Dispositif d'actionnement pour ouvrir et/ou fermer une portière de véhicule, le dispositif comprenant :
- des moyens d'entraînement (4) s'étendant le long d'un axe longitudinal (25) et comprenant une première partie d'entraînement (41) et une partie filetée externe de liaison (2),
- un bras (5) faisant saillie à partir de l'axe d'entraînement (25), le bras (5) comprenant une partie entraînée (51) configurée pour coopérer avec la partie d'entraînement (41) de manière à relier le bras (5) aux moyens d'entraînement (4) afin que le bras (5) soit entraîné en rotation par les moyens d'entraînement selon l'axe longitudinal (25),
- des moyens de fixation (1) comprenant une partie filetée interne (13) destinée à coopérer avec la partie filetée externe de liaison (2) des moyens d'entraînement (4), lesdits moyens de fixation (1) étant configurés pour fixer le bras (5) aux moyens d'entraînement (4),
où les moyens de fixation (1) comprennent au moins une saillie d'attache (12) destinée à coopérer avec un évidement d'attache (22) des moyens d'entraînement (4) pour empêcher la rotation de la fixation dans un sens de dévissage,
et comprennent au moins une protubérance (12a) destinée à être pressée contre une paroi de liaison (2a) des moyens d'entraînement (4), donnant des forces de friction pour une retenue efficace des moyens de fixation (1) sur les moyens d'entraînement (4).

2. Dispositif d'actionnement selon la revendication précédente, dans lequel la saillie d'attache (12) est réalisée en un matériau élastique.

3. Dispositif d'actionnement selon l'une quelconque des revendications 1 et 2, dans lequel l'évidement d'attache (22) comprend une paroi d'arrêt (27) sensiblement perpendiculaire au mouvement de dévissage de la saillie d'attache (12), ladite paroi d'arrêt (27) étant destinée à recevoir une paroi (17) de la saillie d'attache (12) sensiblement perpendiculairement au mouvement de dévissage lorsque ladite saillie d'attache (12) est reçue dans l'évidement d'attache (22).

4. Dispositif d'actionnement selon l'une quelconque des revendications précédentes, dans lequel la saillie d'attache (12) comprend une paroi inclinée (16) destinée à coulisser sur une paroi de coulissement (26) de l'évidement d'attache (22).

5. Dispositif d'actionnement selon la revendication précédente, dans lequel la paroi de coulissement (26) destinée à recevoir la paroi inclinée (16) de la saillie d'attache (12) est une rampe.

6. Dispositif d'actionnement selon la revendication précédente en association avec la revendication 3, dans lequel la rampe est opposée à la paroi d'arrêt (27).

7. Dispositif d'actionnement selon l'une des revendications précédentes, dans lequel les protubérances (12a) sont disposées régulièrement autour de la partie filetée interne (13).

8. Dispositif d'actionnement selon la revendication précédente, dans lequel les moyens de fixation (1) comprennent huit protubérances (12a), de préférence disposées à un angle d'environ 45°.

9. Dispositif d'actionnement selon l'une quelconque des revendications 7 et 8, dans lequel les protubérances (12a) sont réalisés en un matériau élastique.

10. Dispositif d'actionnement selon l'une quelconque des revendications précédentes, dans lequel l'au moins une protubérance (12a) est une agrafe.

11. Dispositif d'actionnement selon l'une quelconque des revendications précédentes, dans lequel l'au moins une saillie d'attache (12) est une agrafe.

12. Dispositif d'actionnement selon l'une quelconque des revendications précédentes, dans lequel la saillie d'attache (12) et l'au moins une protubérance (12a) sont sensiblement identiques.

13. Dispositif d'actionnement selon l'une quelconque des revendications précédentes, dans lequel la saillie d'attache (12) et/ou l'au moins une protubérance (12a) est/sont disposée(s) chacune dans une cavité réalisée dans les moyens de fixation (1).

14. Dispositif d'actionnement selon l'une quelconque des revendications précédentes, dans lequel les moyens de fixation (1) représentent un écrou et les moyens d'entraînement (4) représentent un porte-satellites.

15. Véhicule comprenant une portière pouvant être déplacée dans une position ouverte ou fermée par un dispositif d'actionnement selon l'une quelconque des revendications précédentes.
